(19) **Europäisches Patentamt**
**European Patent Office**
**Office européen des brevets**

(11) **EP 2 336 788 B1**

(12) **EUROPEAN PATENT SPECIFICATION**

(45) Date of publication and mention
of the grant of the patent:
**09.07.2014 Bulletin 2014/28**

(51) Int Cl.:
***G01P 15/125*** *(2006.01)* ***H01L 29/84*** *(2006.01)*
***G01P 1/02*** *(2006.01)*

(21) Application number: **09811372.3**

(22) Date of filing: **28.07.2009**

(86) International application number:
**PCT/JP2009/063421**

(87) International publication number:
**WO 2010/026843 (11.03.2010 Gazette 2010/10)**

(54) **INERTIAL SENSOR**

TRÄGHEITSSENSOR

CAPTEUR D'INERTIE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **08.09.2008 JP 2008229535**

(43) Date of publication of application:
**22.06.2011 Bulletin 2011/25**

(73) Proprietor: **Hitachi, Ltd.**
**Chiyoda-ku**
**Tokyo 100-8280 (JP)**

(72) Inventors:
• **JEONG, Hee-Won**
**Chiyoda-ku,**
**Tokyo 100-8220 (JP)**

• **YAMANAKA, Kiyoko**
**Chiyoda-ku,**
**Tokyo 100-8220 (JP)**

(74) Representative: **Strehl Schübel-Hopf & Partner**
**Maximilianstrasse 54**
**80538 München (DE)**

(56) References cited:
**GB-A- 2 393 785        JP-A- 2004 361 388
JP-A- 2007 333 467        JP-A- 2008 008 820
US-A1- 2004 187 573        US-A1- 2008 098 815**

**Description**

## TECHNICAL FIELD

The present invention relates to an inertial sensor formed by a semiconductor microfabrication technique (microelectro-mechanical system (MEMS) process) and for measuring inertial force such as an applied acceleration by detecting electrostatic capacitance change, and, more particularly, the present invention relates to a technique capable of selecting a plurality of measurement ranges.

## BACKGROUND ART

For example, an inertial sensor is categorized as usage of a general acceleration sensor in each measurement range as follows.

(1) ±2 G: This usage is for measurement of requiring accuracy for ride quality, body shake, an automatic guided vehicle, orientation in a static state, and others. The sensor is adopted for, for example, measurement of mobile phone orientation, image stabilization of a digital camera, a clinometer, automobile suspension control, and automobile brake control such as ABS (Antilock Brake System).
(2) ±4 G: This usage is for measurement of movement of extremities and others. The sensor is adopted for, for example, a human interface between a computer and an amusement machine such as a remote controller for a game machine.
(3) ±30 G to 50 G: The sensor is adopted as a sensor attached to an ECU (Electronic Control Unit) side mainly for an automobile airbag.
(4) ±50 G to 250 G: The sensor is adopted as a sensor attached to a front or rear side of a vehicle mainly for an automobile airbag.

As described above, in the acceleration sensor, respective measurement ranges are required for various usages often, and therefore, the usage has been conventionally handled by a plurality of acceleration sensors each having a different output range. However, recently, in order to meet the demand for space saving and cost reduction, an acceleration sensor made of one sensor having a plurality of measurement ranges has been developed.

For the acceleration sensor made of one sensor having the plurality of measurement ranges, mainly, a method of adjusting or selecting the measurement range by an electric signal processing, a method of integrating a plurality of sensors each having a different measurement range onto one chip to share a peripheral circuit, a substrate, and others, and a method of measuring a wide range by one sensor have been developed.

For example, Patent Document 1 describes an accelerometer control method capable of selecting the measurement range of acceleration, when the applied acceleration is measured by differentially detecting the electrostatic capacitance change with using a parallel-plate-type sensing electrode, with using a plurality of detection signals each having a different frequency and filters matched with the detection signals.

Also, Patent Document 2 describes to enable the downsizing of the acceleration sensor because a plurality of acceleration sensors each having a significantly-different measurement range are formed within one frame, and enable the manufacturing cost reduction thereof because the plurality of acceleration sensors can be collectively formed on one chip by photolithography, etching, and other processes in a formation process and the accurate-matching of acceleration detection axes of a plurality of sensor elements by a mask accuracy in the photolithography.

Further, Patent Document 3 describes to form a movable unit of the acceleration sensor by a plurality of separate movable units and connect these separate movable units to each other by elastically deformable beams. And, it describes, by adjusting a movable range and a weight of each separate movable unit, rigidity of each beam, and others, or by parallely using a plurality of deformation modes each having a different sensitivity area for the acceleration, to enable the improvement of the detection sensitivity to the acceleration and the widening of the acceleration response range.

## PRIOR ART DOCUMENTS

## PATENT DOCUMENTS

Patent Document 1: Japanese Patent Application Laid-Open Publication No. 2004-198310
Patent Document 2: Japanese Patent Application Laid-Open Publication No. 2008-70312
Patent Document 3: Japanese Patent Application Laid-Open Publication No. 2008-8820

US 2004/187573 A1 discloses a sensor with the features in the preamble of present claims 1 and 2. Other conventional sensors are described in GB 2393785 A and US 2008/098815 A1.

## DISCLOSURE OF THE INVENTION

### PROBLEMS TO BE SOLVED BY THE INVENTION

Meanwhile, as a result of studies on the above-described acceleration sensor y the present inventors, the following has been found out.

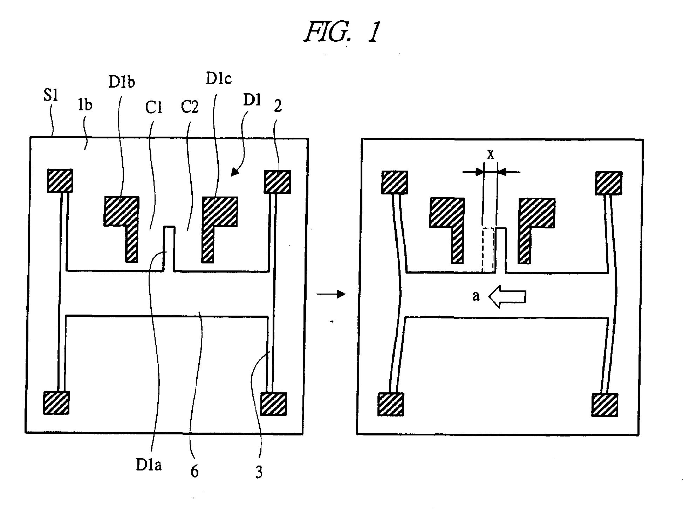

For example, a first problem of the conventional technique as described in the above-described Patent Document 1 or others is that SNR (signal to noise ratio) and linearity of the acceleration output cannot be parallely improved. Here, the problem is described with reference to FIGs. 1 to 3 illustrating a general acceleration sensor studied by the inventors as a premise of the present invention.

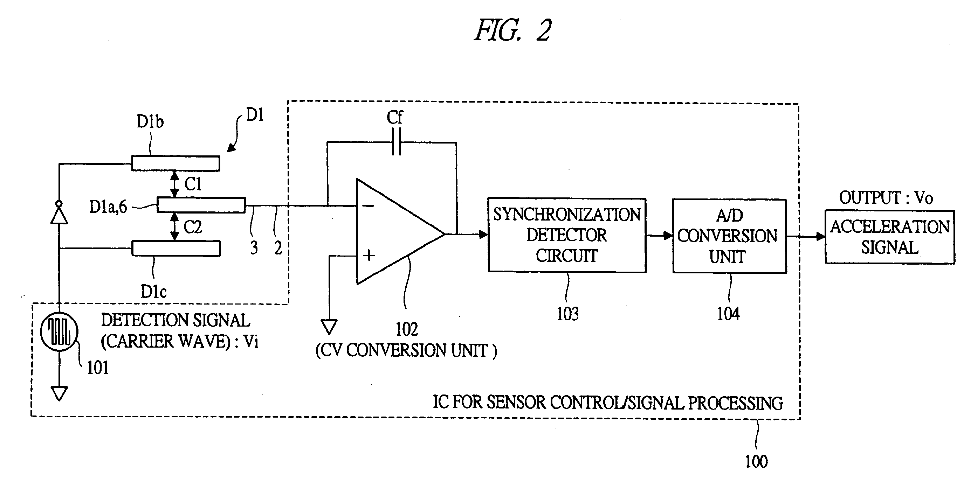

When the plurality of ranges are provided by the electric signal processing with using one acceleration detecting unit, the SNR of a narrower measurement range is sacrificed. In a parallel-plate-type acceleration sensor S1 illustrated in FIG. 1, a detecting unit D1 includes: a movable electrode D1a; and fixed electrodes D1b and D1c, and an electrostatic capacitance change $\Delta C$ caused by a distance variation (a displacement "x" of the movable electrode D1a) between respective electrodes is differentially detected with using an electric circuit (IC 100 for sensor control and signal processing) illustrated in FIG. 2, so that the applied acceleration is outputted as a voltage signal. The applied acceleration "a" and the displacement "x" of the movable electrode D1a have a linearity relation as the following Expression (1).

[Expression 1]

$$x = \frac{1}{(2\pi f_0)^2} \cdot a \qquad \text{Expression (1)}$$

$$f_0 = \frac{1}{2\pi} \cdot \sqrt{\frac{k}{m}}$$

In Expression (1),

    x: displacement of the movable electrode D1a (movable unit), a: applied acceleration,
    $f_0$: natural frequency of the acceleration sensor S1,
    m: weight of the movable unit, and
    k: constant of spring of the support beam suspending the movable unit

are shown.

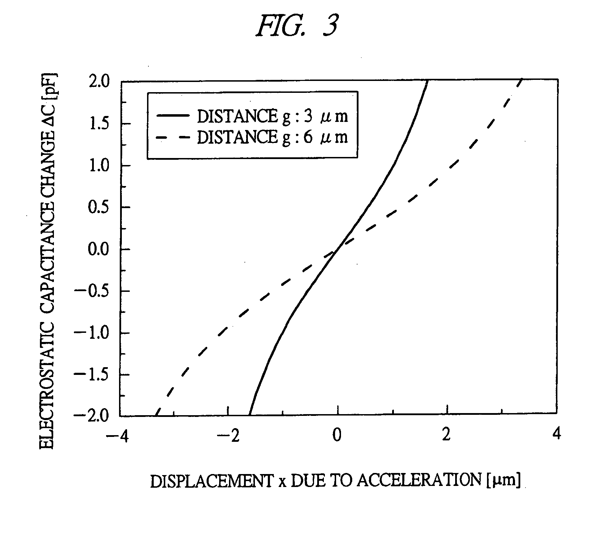

However, in the parallel-plate-type detecting unit D1, the electrostatic capacitance change $\Delta C$ ($\Delta C = C2-C1$) with respect to the displacement x has nonlinearity. Expression (2) is a relational expression between the displacement x and the electrostatic capacitance change $\Delta C$, which represents the electrostatic capacitance change $\Delta C$ with respect to the displacement x when the distance "g" between the movable electrode D1a and the fixed electrodes D1b/D1c is set to 3 $\mu$m and 6 $\mu$m. From FIG. 3 and the following Expression (2), it can be found out that the electrostatic capacitance change $\Delta C$ and the displacement x have a nonlinear relation.

[Expression 2]

$$\Delta C = C2 - C1 = \varepsilon A \left( \frac{1}{g-x} - \frac{1}{g+x} \right)$$ Expression (2)

In Expression (2),

$\varepsilon$: dielectric constant of air,
A: area between the movable electrode D1a and the fixed electrodes D1b/D1c, and
g: distance between the movable electrode D1a and the fixed electrodes D1b/D1c

are shown.

An output Vo of the acceleration sensor S1 can be obtained from a relational expression among the electrostatic capacitance change $\Delta C$ due to the displacement x between the movable unit 6 and the movable electrode D1a caused by the application of the acceleration a, an amplitude (voltage) "Vi" of a carrier wave 101 applied to each of the fixed electrodes D1b and D1c of the detecting unit D1, and a reference capacitance "Cf". The output relational expression of the acceleration sensor S1 is shown in Expression (3) .

[Expression 3]

$$Vo = \frac{\Delta C}{Cf} \cdot Vi$$ Expression (3)

In Expression (3),

Vo: output voltage of the acceleration sensor S1,
$\Delta C$: electrostatic capacitance change of the detecting unit D1,
Cf: reference capacitance, and
Vi: voltage of the carrier wave 101

are shown.

In order to maximize the SNR of the acceleration sensor S1, it is required to increase a mechanical displacement $\Delta x$ per unit acceleration. In addition to this, there are a method of increasing the amplitude Vi of the carrier wave and a method of decreasing the reference capacitance Cf in the above-described Expression (3). However, these methods are absolutely for a matter of optimization anyway, and the most dominant factor is to increase the mechanical displacement $\Delta x$ per unit acceleration.

Therefore, in order to obtain the maximum SNR, when an acceleration range to be measured is taken as "$\pm$a" and the distance between the movable electrode D1a and the fixed electrodes D1b/D1c in the detecting unit D1 is taken as "g", the displacement x when the acceleration of "$\pm$a" is applied is set to a value as close as possible to "g" so that these electrodes are not contacted with each other. However, as described with using FIG. 3 and Expression (2), in the parallel-plate-typed detecting unit D1, the electrostatic capacitance change $\Delta C$ becomes extremely nonlinear as the displacement x is closer to the distance "g". Eventually, the maximum value of the displacement x is determined by allowable range of the nonlinearity and distance "g" in specifications.

In the acceleration sensor in which the plurality of measurement ranges are provided by the electric signal processing with using one detecting unit D1, it is required to determine the maximum value of the displacement x based on the widest range among the plurality of measurement ranges because of limitation of the nonlinearity. Therefore, in a narrow measurement range, there arises a problem that the displacement x is small and the SNR is decreased (sacrificed).

Also, a second problem of the conventional technique as described in the above-described Patent Document 2 or others is that, when the significantly different measurement ranges are provided, a yield is decreased and the downsizing is disadvantageous because variation in performance is large due to a dimensional shift caused by the process.

When a plurality of vibration systems (vibration systems each formed of an independent movable unit and a spring) are formed on one substrate in order to obtain the plurality of measurement ranges, lengths and widths of the movable unit and the spring forming each vibration system are significantly different depending on a magnitude of each measurement range. A manufacturing error in the process may depend on a detailed shape of a mechanical structure forming the sensor. However, the error often appears as a uniform dimensional shift in a wafer surface as long as layout rules are established.

In this dimensional shift, the width of the spring forming each vibration system is uniformly shifted from a design value, and therefore, influence of the shift is large for a sensor structure whose measurement range is narrow, and is small for a sensor structure whose measurement range is wide. For example, when a dimensional shift of -0.5 $\mu$m uniformly occurs, a support beam whose width is to be 3 $\mu$m becomes 2.5 $\mu$m, and a support beam whose width is to be 6 $\mu$m becomes 5.5 $\mu$m. Therefore, if the lengths of the support beam forming respective springs are constant, the constants of the respective springs are decreased by 42% and 23% which are different from each other in an amount of the decrease. Such a difference in a degree of the influence depending on each structure resultantly decreases the yield, and, as a result, process management becomes difficult. As a matter of course, since a position of each vibration system is independent from the other, their occupied areas become large, and therefore, the downsizing is disadvantageous.

Further, a third problem of the conventional technique as described in the above-described Patent Document 3 is that, when the measurement range is expanded by connecting the plurality of separate movable units to each other and partially stopping the displacement of the separate movable units for each measurement range, the linearity in all measurement ranges is deteriorated, and sensitivity (sensitivity = output/acceleration) is decreased lower than that of a case of detecting the sensitivity by dividing the all measurement ranges into several ranges to form each vibration system.

Accordingly, the present invention attempts to solve the problems as described above, and a main preferred aim of the present invention is to provide an inertial sensor such as an acceleration sensor whose downsizing can be achieved and in which a high SNR can be obtained as providing a plurality of measurement ranges.

More specifically, firstly, it is to provide an inertial sensor capable of parallely improving the linearity of the SNR and the acceleration output in all measurement ranges. Secondly, it is to provide an inertial sensor which can be robust in a process error and whose downsizing can be achieved even when significantly different measurement ranges are provided. Thirdly, it is to provide an inertial sensor having output ranges whose types are more than that of a vibration system including a movable unit and a spring.

The above and other preferred aims and novel characteristics of the present invention will be apparent from the description of the present specification and the accompanying drawings.

## MEANS FOR SOLVING THE PROBLEMS

The invention is defined in the present independent claims and will be briefly described as follows.

According to an illustrative example, a plurality of measurement ranges are provided by providing a plurality of detecting units each having a different sensitivity defined by a ratio of an applied inertial force with respect to physical quantity generated from each detecting unit. Also, the summary has characteristics that, when N pieces (a natural number of 2 or larger) of movable units are provided, (N+1) or more types of measurement ranges are provided.

Firstly, according to the illustrative example, in an inertial sensor for detecting an inertial force of acceleration based on a change of an electrostatic capacitance of a detecting unit, the inertial sensor including: a movable unit suspended on a substrate via an elastic body; and the detecting unit including a movable electrode formed on the movable unit and a fixed electrode formed on the substrate, a plurality of range outputs are obtained by providing a plurality of detecting units each having a different sensitivity when the ratio of the applied inertial force with respect to the physical quantity generated from the detecting unit is defined as the sensitivity.

Also, secondly, by providing a plurality of movable units, a detecting unit for detecting a relative displacement of each movable unit with respect to a fixed unit, and (at least one piece of) detecting unit for detecting a relative displacement between the movable units, a ratio between the measurement ranges is 10 or larger, which are significantly separated from each other, as providing a plurality of output ranges. Further, since each detecting unit is similar to the other in a shape such as a distance therebetween, variation in performance due to a process error is small, and yields are high, and therefore, this is advantageous for their cost reduction.

Further, thirdly, by providing N pieces of movable units, a detecting unit for detecting a relative displacement of each movable unit with respect to a fixed unit, and (at least one piece of) detecting unit for detecting a relative displacement between the movable units, (N+1) or more types of output ranges are obtained, and the downsizing is advantageous because vibration systems share the movable unit and the spring with each other.

## EFFECTS OF THE INVENTION

The effect obtained will be briefly described below.

That is, the effect obtained is to provide an inertial sensor such as an acceleration sensor whose downsizing can be achieved and in which a high SNR can be obtained as providing a plurality of measurement ranges.

More specifically, firstly, according to the illustrative example, linearity of SNR and acceleration output can be parallely improved in all measurement ranges. Also, secondly, as having significantly different measurement ranges, the inertial sensor can be robust in a process error, and downsizing can be achieved. Further, thirdly, output ranges whose types are more than that of a vibration system including a movable unit and a spring can be obtained.

## BRIEF DESCRIPTIONS OF THE DRAWINGS

FIG. 1 is an explanatory view illustrating an operation principle of a general acceleration sensor studied as a premise of the present invention;

FIG. 2 is an explanatory diagram illustrating a signal processing of the general acceleration sensor studied as the premise of the present invention;

FIG. 3 is an explanatory diagram illustrating a detection nonlinearity of the general acceleration sensor studied as the premise of the present invention;

FIG. 4 is a plan view illustrating an example of a main structure of an inertial sensor according to an illustrative example useful to understand the present invention;

FIG. 5 is a cross-sectional view illustrating a cross-sectional surface cut along a line A-A' in FIG. 4;

FIG. 6 is a cross-sectional view illustrating an example of a package structure on which the inertial sensor according to the illustrative example is mounted;

FIG. 7 is an explanatory view illustrating a vibration system model of the inertial sensor according to the illustrative example;

FIG. 8 is a graph illustrating nonlinearity and a change of electrostatic capacitance with respect to a displacement in the inertial sensor according to the illustrative example;

FIG. 9 is a structural diagram illustrating an example of an electric structure of the inertial sensor according to the illustrative example;

FIG. 10 is a plan view illustrating an example of a main structure of an inertial sensor according to a first embodiment of the present invention;

FIG. 11 is an explanatory view illustrating a vibration system model of the inertial sensor according to the first embodiment of the present invention;

FIG. 12 is a structural diagram illustrating an example of an electric structure of the inertial sensor according to the first embodiment of the present invention;

FIG. 13 is a plan view illustrating an example of a main structure of an inertial sensor according to a second embodiment of the present invention;

FIG. 14 is an explanatory diagram illustrating a vibration system model of the inertial sensor according to the second embodiment of the present invention; and

FIG. 15 is a structural diagram illustrating an example of an electric structure of the inertial sensor according to the second embodiment of the present invention.

## BEST MODE FOR CARRYING OUT THE INVENTION

In the illustrative example and the embodiments described below, the invention will be described in a plurality of sections when required as a matter of convenience. However, these sections are not irrelevant to each other unless otherwise stated, and the one relates to the entire or a part of the other as a modification example, details, or a supplementary explanation thereof.

Also, in the illustrative example and the embodiments described below, when referring to the number of elements (including number of pieces, values, amount, range, and the like), the number of the elements is not limited to a specific number unless otherwise stated or except the case where the number is apparently limited to a specific number in principle. The number larger or smaller than the specified number is also applicable.

Further, in the illustrative example and the embodiments described below, it goes without saying that the components (including element steps) are not always indispensable unless otherwise stated or except the case where the components are apparently indispensable in principle.

Similarly, in the illustrative example and the embodiments described below, when the shape of the components, positional relation thereof, and the like are mentioned, the substantially approximate and similar shapes and the like are included therein unless otherwise stated or except the case where it is conceivable that they are apparently excluded in principle. The same goes for the numerical value and the range described above.

Also, components having the same function are denoted by the same reference symbols throughout the drawings for describing the example and the embodiments, and the repetitive description thereof is omitted.
Note that hatching is used even in a plan view so as to make the drawings easy to see.

Illustrative Example

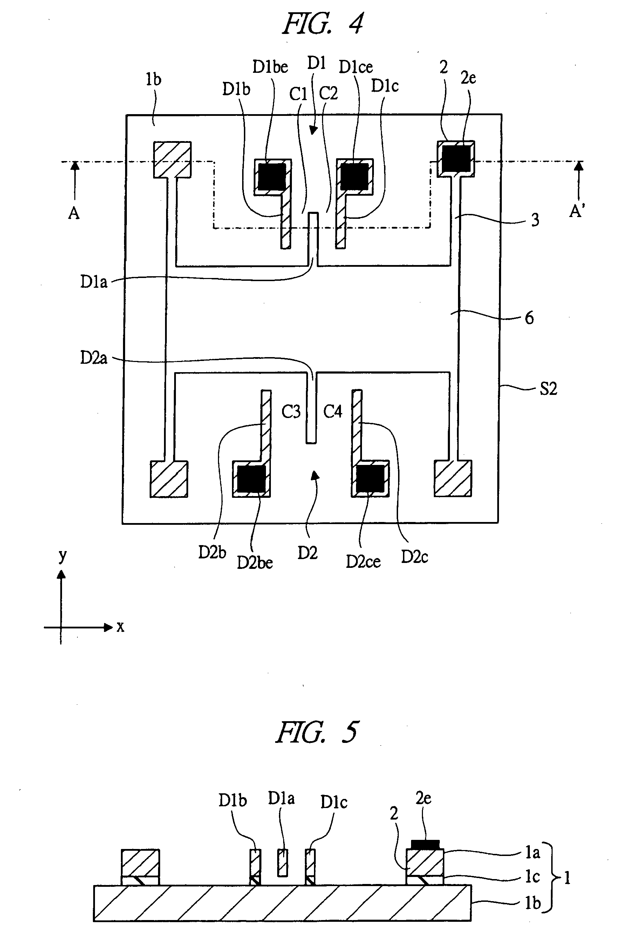

An inertial sensor according to the present illustrative example is described with reference to the drawings. FIG. 4 is a plan view illustrating an example of a main structure of the inertial sensor according to the illustrative example useful to understand the present invention. FIG. 5 is a cross-sectional view illustrating a cross-sectional surface cut along a line A-A' in FIG. 4.

First, the main structure (mechanical structure unit) of the inertial sensor according to the example is described. In FIGs. 4 and 5, it is assumed that an inertial sensor S2 is formed by processing, for example, a SOI (Silicon On insulator) substrate 1 with using photolithography and DRIE (Deep Reactive Ion Etching) . As a matter of course, here, an example of manufacturing with using the SOI substrate 1 is merely described. In a concept of the example, the manufacture may be performed with using a so-called bulk MEMS process of forming the structure by processing the front and rear surfaces of a silicon substrate as a glass silicon-glass combined technique or others, or with using a so-called surface MEMS process of forming the structure by depositing a thin film on a surface of a silicon substrate on which a signal-processing circuit such as a transistor is previously formed and repeatedly patterning the deposited thin film.

In the SOI substrate 1 descried here as the example, an intermediate insulating layer 1c is formed on a support substrate 1b, and an active layer (conductive layer) 1a is formed on this intermediate insulating layer 1c. The support substrate 1b is made of, for example, silicon (Si), and the intermediate insulating layer 1c is made of, for example, silicon oxide ($SiO_2$). Further, the active layer 1a formed on the intermediate insulating layer 1c is made of, for example, conductive silicone.

The inertial sensor S2 of the example includes: a fixed unit 2 supported and fixed on the support substrate 1b via the intermediate insulating layer 1c; a support beam 3 for movably supporting a movable unit 6 described later with respect to the fixed unit 2; the movable unit 6 suspended by the support beam 3, and, in applying an acceleration, displaced as following the acceleration; detecting units D1 and D2 for detecting an amount of displacement of the movable unit 6; and electrode pads 2e, D1be, D1ce, D2be, and D2ce for exchanging signals with an external circuit through wire bonding or others.

In the detecting unit D1, fixed electrodes D1b and D1c are arranged to a movable electrode D1a in a parallel-plate shape to form electrostatic capacities C1 and C2, respectively. Similarly, in the detecting unit D2, fixed electrodes D2b and D2c are arranged to a movable electrode D2a in a parallel-plate shape to form electrostatic capacities C3 and C4, respectively. Each of the detecting units D1 and D2 is configured so as to be differentially detected. For example, when the movable unit 6 displaces in a +x direction, the detecting unit D1 include: the electrostatic capacity C1 whose electrostatic capacitance is decreased; and the electrostatic capacity C2 whose electrostatic capacitance is increased. Similarly, when the movable unit 6 displaces in the +x direction, the detecting unit D2 includes: the electrostatic capacity C3 whose electrostatic capacitance is decreased; and the electrostatic capacity C4 whose electrostatic capacitance is increased. These detecting units D1 and D2 are configured to have different sensitivities (S) from each other, which are defined by a ratio between an inertial force of the applied acceleration and physical quantity generated from each detecting unit.

In this inertial sensor S2, the electrode pad 2e is provided on a surface of one fixed unit 2 among four-positioned fixed units 2 for movably fixing the movable unit 6 onto the SOI substrate 1 by the support beam 3 extending from this movable unit 6 in four directions. Note that the electrode pad may be provided on the four-positioned fixed units 2. Also, the electrode pads D1be and D1ce are provided on surfaces of outer ends of the respective fixed electrodes D1b and D1c of the detecting unit D1. Similarly, the electrode pads D2be and D2ce are provided on surfaces of outer ends of the respective electrode pads D2b and D2c of the detecting unit D2.

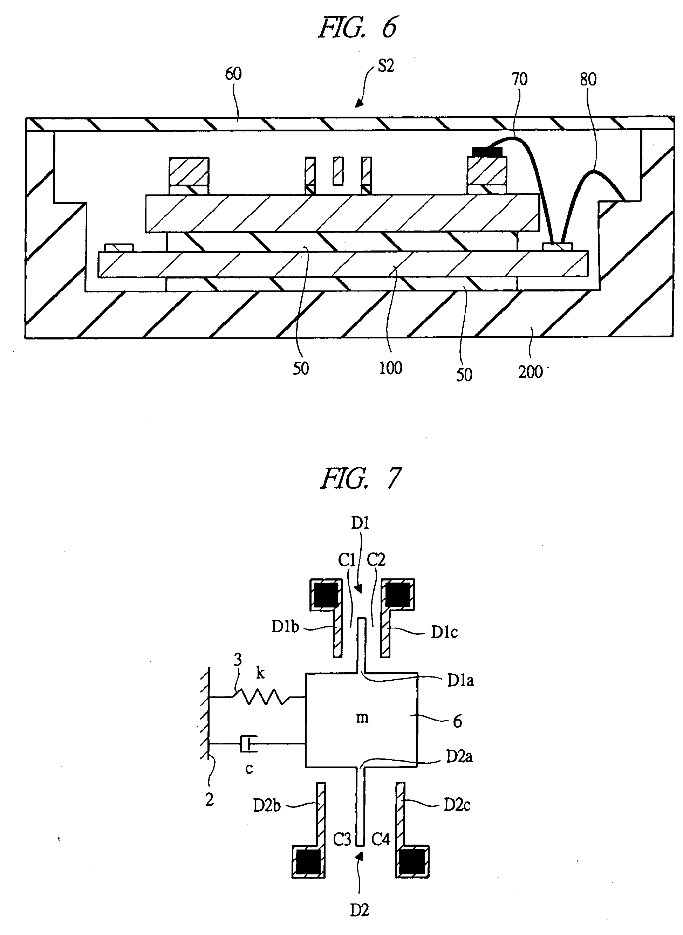

FIG. 6 is a cross-sectional view illustrating an example of a package structure on which the inertial sensor S2 according to the example is mounted.

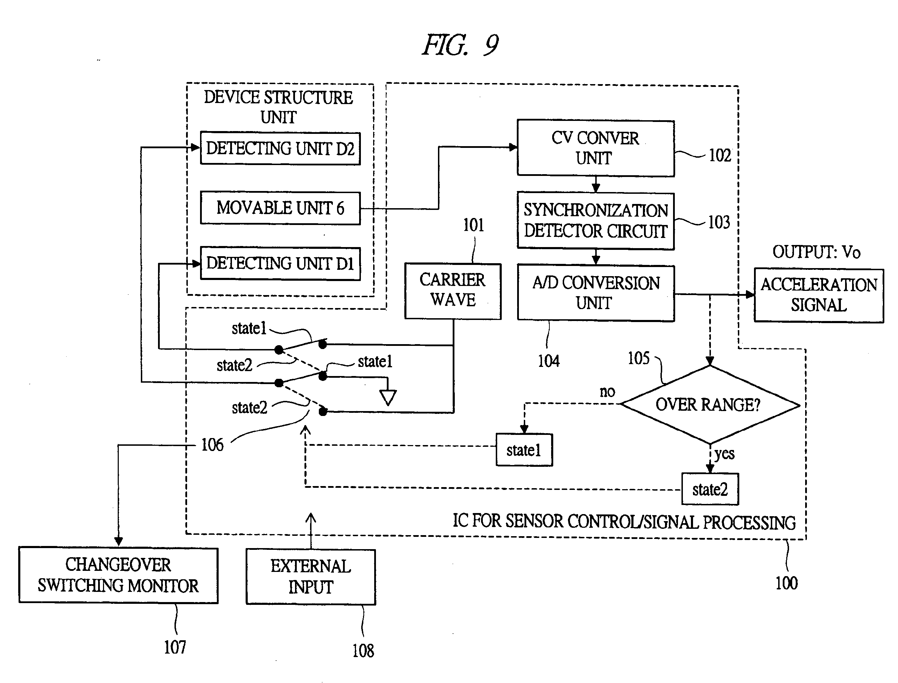

The package structure on which the inertial sensor S2 according to the example is mounted uses a ceramic PKG (package) 200. Firstly, on an inner base surface of a concave portion of the ceramic PKG 200, an IC 100 for sensor control/signal processing illustrated in FIG. 9 described later is mounted via an adhesive 50. Further, on the IC 100 for sensor control/signal processing, the inertial sensor S2 is mounted via the adhesive 50 again. Then, the IC 100 for sensor control/signal processing and the inertial sensor S2 are electrically connected to each other by wire bonding with using a wire 70. Finally, the IC 100 for sensor control/signal processing and the ceramic PKG 200 are electrically connected to each other with using a wire 80, and are sealed by a lid 60, so that the inertial sensor having the package structure is completed.

Next, a characteristic structure of the example is described in further detail. A characteristic of the example is to provide a plurality of detecting units corresponding to the respective ranges in order to measure a plurality of ranges by one vibration system. Here, one vibration system means a vibration structure which can be represented by one movable unit and one spring (corresponding to the support beam) . For example, the inertial sensor S2 illustrated in FIG. 4 can be rewritten in FIG. 7 as a vibration system model including: a spring (a constant of the spring is "k"); a movable unit; a damping unit (c); and the detecting units D1 and D2 for convenience of functional description.

FIG. 7 is an explanatory diagram illustrating the vibration system model of the inertial sensor S2 according to the example, and the same components are denoted by the same reference symbols so as to correspond to an actual shape. In this vibration system model, weights of the movable unit 6 and the movable electrodes D1a and D2a are mainly represented by "m" in the above-described Expression (1), and total constant of the spring of the support beam 3 is represented by "k". Therefore, from the above-described Expression (1), a natural frequency "f0" of the inertial sensor S2 and a displacement amount of the displacement x of the movable unit 6 obtained when the acceleration "a" is applied in a detecting direction (an x direction) can be obtained.

When the displacement x occurs, in each the detecting units D1 and D2, a distance between the movable electrode D1a and the fixed electrodes D1b/D1c and a distance between the movable electrode D2a and the fixed electrodes D2b/D2c are varied, so that the electrostatic capacitances C1 and C2 of the detecting unit D1 and the electrostatic capacitances C3 and C4 of the detecting unit D2 are changed, respectively. The electrostatic capacitance change can be detected by the IC 100 for sensor control/signal processing illustrated in FIG. 9 described later. That is, the electrostatic capacitance change is differentially inputted to a CV conversion unit 102 of the IC 100 for sensor control/signal processing via the electrode pad (common electrode) 2e connected to the movable unit 6 by applying a carrier wave 101 for detecting the electrostatic capacitances from the IC 100 for sensor control/signal processing to the electrode pads D1be and D1ce of the detecting unit D1 and the electrode pads D2be and D2ce of the detecting unit D2. The electrostatic capacitance change is converted to a voltage signal by the CV conversion unit 102, and only necessary signal component of the voltage signal is extracted by a synchronization detector circuit 103 and is finally converted to a digital value by an A/D converter unit 104, and then, is outputted to an outside.

Next, designing of the detecting units D1 and D2 is described in further detail. Here, for convenience of the description, specific numerical values are used. However, they do not particularly limit the effect of the example, and the concept of the example can be generally applicable.

For example, an acceleration sensor which detects the acceleration ranges $\pm$2G and $\pm$4G in a detection nonlinearity of $\pm$1% is assumed. And, it is assumed that the input of the saturated electrostatic capacitance change ($\Delta$C) to the CV conversion unit 102 of the IC 100 for sensor control/signal processing is 0.25 pF, and the distance g between the movable electrode D1a and the fixed electrodes D1b/D1c of the detecting unit D1 of the plurality of detecting units D1 and D2 is 3 $\mu$m. Here, the distance g is often determined by process restriction. In the case of the parallel-plate-type detecting units for which the electrostatic capacitance detecting method is used, its initial capacitance is proportional to an opposing area "A" of both electrodes forming the electrostatic capacitance, and is inversely proportional to the distance g between the both electrodes. Therefore, the opposing area A can be decreased as narrowing the distance g, and, as a result, the detecting unit is downsized.

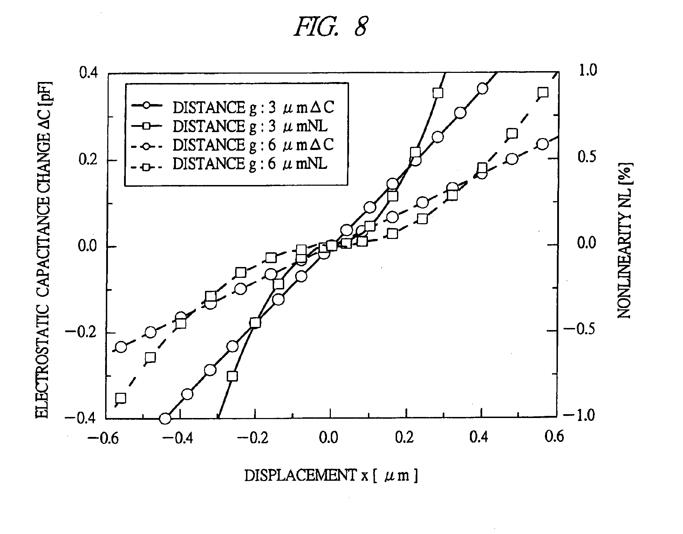

A premise condition or a specification required for the designing has been prepared here, and therefore, the natural frequency f0 of the inertial sensor S2 and the other detecting unit D2 can be designed based on the concept of the example. Firstly, the natural frequency f0 is determined by the narrower distance g of either the detecting unit D1 or D2 (here, the distance of 3 $\mu$m in the detecting unit D1) and the nonlinear specification of $\pm$1%. In FIG. 8, on an enlarged diagram of a part of the above-described FIG. 3, the detection nonlinearity in the displacement x of the movable unit 6 is overlapped. That is, FIG. 8 is a graph illustrating a nonlinearity "NL" and the electrostatic capacitance change $\Delta$C with respect to the displacement x.

Here, the nonlinearity NL is defined as a capacitance variation of the detecting unit when the displacement x is 0, that is, a ratio of the electrostatic capacitance change $\Delta$C practically obtained from the displacement x with respect to an ideal capacitance change line obtained by multiplying the displacement x with a value (sensitivity S) obtained by substituting 0 as the displacement x into an expression obtained by differentiating the above-described Expression (2) with respect to the displacement x. A definition of the sensitivity S is expressed by Expression (4), and a definition of the nonlinearity NL is expressed by Expression (5) below.

[Expression 4]

$$S = \frac{d\Delta C}{dx} = \varepsilon A \left( \frac{1}{(g-x)^2} + \frac{1}{(g+x)^2} \right) \quad \text{Expression (4)}$$

In Expression (4),
S : sensitivity of the inertial sensor (x=0) is shown.
[Expression 5]

$$NL = \left( \frac{\Delta C(x)}{S(0) \cdot x} - 1 \right) \times 100 \cdots \% \qquad \text{Expression (5)}$$

In Expression (5),

S(0): sensitivity of the inertial sensor, and
x: displacement of the movable unit 6

are shown.

From FIG. 8, when the distance g of the detecting unit D1 is 3 $\mu$m, it can be found out that the displacement x satisfying the nonlinearity NL of $\pm$1% or smaller is $\pm$0.3 $\mu$m. This means that it is required to displace the movable unit 6 by $\pm$0.3 $\mu$m in the acceleration measurement range of $\pm$2G in order to obtain the maximum SNR as satisfying the output nonlinearity of $\pm$1% with using the detecting unit D1. As a matter of course, since $\Delta$C larger than the assumed electrostatic capacitance change $\Delta$C occurs due to influences such as vibration disturbance caused by other components than the signal components, it is required to provide the design having a margin for the nonlinearity in the actual designing. However, this is not related to the essence of the example, and therefore, this description is omitted. However, even in this case, the basic concept of the example is applicable. Here, it is assumed that there is no vibration disturbance caused by other components than the signal components or others, and the description is continued.

Once the required displacement amount is determined, the natural frequency f0 is determined from the relational expression between the displacement x and the natural frequency f0 in the above-described Expression (1). Here, in the case of the inertial sensor S2 described as the example, the natural frequency f0 is 1300 Hz.

Next, designing of the detecting unit D2 is described. In order to obtain the maximum SNR as satisfying the detection nonlinearity of $\pm$1% or smaller in the detecting unit D2, it is only required to detect the acceleration range of $\pm$4G in the detection nonlinearity NL of $\pm$1%. Since the natural frequency f0 of the inertial sensor S2 is 1300 Hz, the displacement x obtained when $\pm$4G is applied is $\pm$0.6 $\mu$m from the above-described Expression (1). Therefore, when the displacement x is $\pm$0.6 $\mu$m, it is only required to determine the distance g between the movable electrode D2a and the fixed electrodes D2b and D2c of the detecting unit D2, by which the nonlinearity NL becomes $\pm$1%, and therefore, the distance is 6 $\mu$m in the inertial sensor S2 (see FIG. 8).

However, the mere wide distance adversely decreases the initial electrostatic capacitances C3 and C4 of the detecting unit D2, and therefore, an absolute value of $\Delta$C obtained when $\pm$4G is applied is decreased. In the case of the inertial sensor S2, a ratio between the electrostatic capacitance change $\Delta$C of the detecting unit D1 obtained when $\pm$2G is applied and the electrostatic capacitance change $\Delta$C of the detecting unit D2 obtained when $\pm$4G is applied is 7.43. Therefore, by providing an electrode scale of the detecting unit D2 to be 7.43 times that of the detecting unit D1, the CV conversion unit 102 can be shared. Here the scale of the detecting unit D2 is increased by increasing the opposing area A between the electrodes. As a result, both of the detecting units D1 and D2 have the same electrostatic capacitance change $\Delta$C with respect to the maximum measured acceleration ($\pm$2G and $\pm$4G). That is, when the measurable maximum acceleration for each measurement range of each of the detecting units D1 and D2 is applied, the value of the electrostatic capacitance change is the same value for each of the detecting units.

FIG. 9 is a structural diagram illustrating an example of an electric structure of the inertial sensor S2 of the example. With reference to FIG. 9, a method of selecting each range and processing an unselected detecting unit is described.

The inertial sensor S2 of the example includes, in the electrical structure: the IC 100 for sensor control/signal processing connected to the mechanical structure unit including the detecting units D1 and D2, the movable unit 6, and others, as described above; a changeover switch monitor 107; and others, and can accept an external input 108. In the IC 100 for sensor control/signal processing, there are provided: the CV conversion unit 102 for converting the value of the electrostatic capacitance change of the detecting units D1 and D2 to a voltage value; the synchronization detector circuit 103 for detecting an output from the CV conversion unit 102 in synchronization; the A/D converter unit 104 for performing analog/digital conversion of an output from the synchronization detector circuit 103; an over-range determining unit 105 for determining whether or not the output value from the CV conversion unit 102 (more specifically, the output value of the A/D conversion unit 104 obtained after the synchronous detection and the analog/digital conversion) exceeds a certain range; and a range changeover switch 106 for switching between signals from the detecting units D1 and D2 and the carrier wave 101 to be applied to the detecting units D1 and D2 based on an output signal from the over-range determining unit 105; and others. Further, the range changeover switch 106 functions also as a switch for selecting any of the measurement ranges.

The inertial sensor S2 of the example is applicable for a method of manually switching the measure range and a method of automatically switching the measurement range.

Firstly, the method of automatically switching the measurement range is described. The range changeover switch 106 of FIG. 9 is set at "state 1" as an initial state of the inertial sensor S2, so that the carrier wave 101 is applied to the detecting unit D1 (in ±2G range). On the other hand, the detecting unit D2 is connected to a common potential, so that the potential becomes at the same potential as the DC level of the movable unit 6. In this state, when an acceleration of ±2G or larger is applied, the CV conversion unit 102 is saturated or a voltage of an output end of the A/D conversion unit 104 exceeds a certain value.

When the acceleration is applied, the movable unit 6 is displaced in a direction opposite to the acceleration in accordance with the inertial law. At this time, the electrostatic capacitance change between the movable electrode D1a and the fixed electrodes D1b/D1c of the detecting unit D1 and between the movable electrode D2a and the fixed electrodes D2b/D2c of the detecting unit D2 are converted to the changes of the voltage values by the CV conversion unit 102, and further, are detected in synchronization by the synchronization detector circuit 103, and then, the analog value is converted to the digital value by the A/D converter unit 104.

Then, the over-range determining unit 105 determines whether or not the value is over ranged based on the output value from the A/D conversion unit 104, and, if it is over ranged (yes), the over-range determining unit 105 generates a signal for controlling the state of the range changeover switch 106 to switch the range changeover switch 106, so that the measurement range is switched to a wider measurement range (from state 1 to state 2). On the other hand, if it is not over ranged (no), the switching to the wider measurement range is unnecessary, and therefore, the measurement range remains at state 1. Also, the range changeover switch 106 outputs the current state to the external changeover switch monitor 107, so that the selected measurement range is noticed to an outside.

Meanwhile, in the method of manually switching the measurement range, the range changeover switch 106 is switched from state 1 to state 2 by the external input 108.

In the inertial sensor S2 of the example, the measurement ranges of ±2G and ±4G can be selected. Also, the measurement range is only limited by the natural frequency f0 of the inertial sensor S2 and the narrower distance between the movable electrode and the fixed electrodes of either the detecting unit D1 or D2, and therefore, is not particularly limited to ±2G and ±4G. For example, in the inertial sensor S2 of the example, the distance between the movable electrode D1a and the fixed electrodes D1b/D1c of the detecting unit D1 is 3 μm, and it is found out from the above-described Expression (1) that, when the acceleration of 20G is applied, the movable electrode D1a and the fixed electrodes D1b/D1c of the detecting unit D1 are physically in contact with each other. Therefore, the measurement limit of the inertial sensor S2 is 20G.

However, if it is desired to measure an acceleration of a wider range, it is only required to increase the natural frequency f0. From the relation of the above-described Expression (1), it is found out that, if the natural frequency f0 is increased to be 5 times the original one, the measurable range is increased to be 25 times the original one. That is, since the output ranges are ±2G and ±4G when the f0 is 1300 Hz, when the f0 is set to 6500 Hz, the output ranges become ±50G and ±100G. Also, by additionally providing a detecting unit having a different sensitivity S, the selectable measurement range is increased.

By performing the procedure of designing the inertial sensor S2 according to the example described above, an inertial sensor capable of ensuring the maximum SNR and an acceleration output linearity of a defined value or smaller in all measurement ranges can be provided. That is, the plurality of range outputs can be obtained by the plurality of detecting units D1 and D2 each having a different sensitivity (S: Expression (4)) defined by the ratio between the applied acceleration and the physical quantity generated from the detecting unit, so that both of the SNR and the linearity of the acceleration output can be parallely achieved in all measurement ranges.

First Embodiment

The greatest characteristic of an inertial sensor according to a first embodiment is to have two measurement ranges significantly different from each other. Although the inertial sensor described in the illustrative example has the plurality of ranges, a ratio between the ranges is realistically 5 or smaller due to the limitations for the distance g between the electrodes and for the size of the mechanical structure, which can be practically manufactured together.

The inertial sensor in the first embodiment includes: a plurality of movable units; a detecting unit for detecting a relative displacement of each movable unit with respect to a fixed unit; and (at least one) detecting unit for detecting a relative displacement between the movable units, so that the ratio between the measurement ranges is 10 or larger as having the plurality of output ranges. Further, since the detecting units have the similar shape such as the distance therebetween, performance variation due to a process error is small, and therefore, they are robust in the process error.

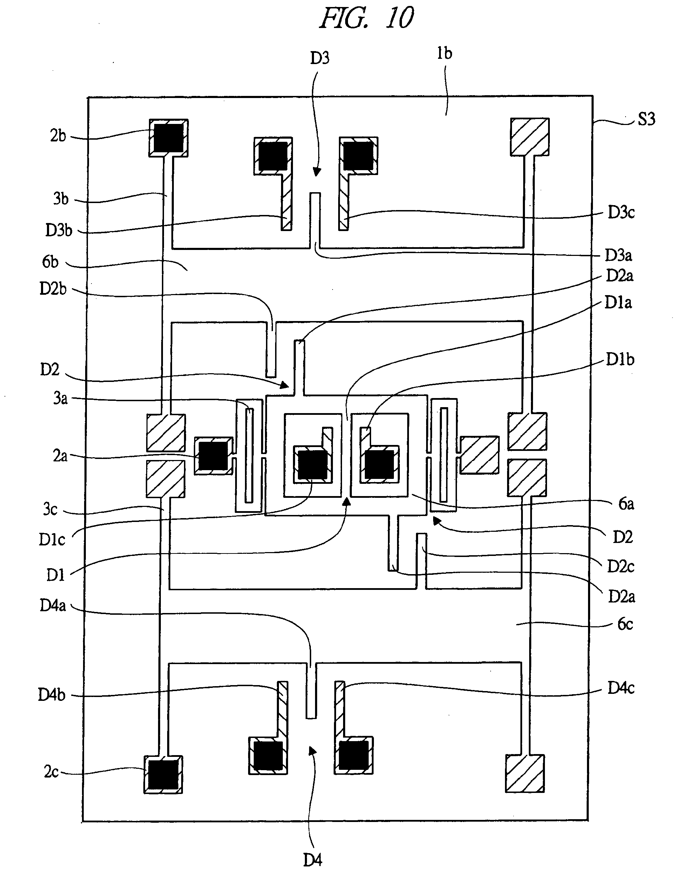

Hereinafter, an inertial sensor according to the first embodiment is described with reference to the drawings, and overlapping components to those of the illustrative example are denoted by the same reference symbols and the description for them will be omitted. FIG. 10 is a plan view illustrating an example of a main structure of the inertial sensor according to the first embodiment.

An inertial sensor S3 of the first embodiment includes: fixed units 2a, 2b, and 2c supported and fixed on a support substrate 1b; support beams 3a, 3b, and 3c for movably supporting movable units 6a, 6b, and 6c described later with respect to the fixed units 2a, 2b, and 2c; the movable units 6a, 6b, and 6c suspended by the respective support beams 3a, 3b, and 3c and, in applying an acceleration, displaced as following the acceleration; detecting units D1, D2, D3, and D4 for detecting an amount of the displacement of the movable units 6a, 6b, and 6c; and electrode pads (whose reference symbols are omitted) for exchanging signals with an external circuit through wire bonding or others.

The detecting unit D1 is a detecting unit for detecting the relative displacement of the movable unit 6a with respect to the fixed unit 2a, and fixed electrodes D1b and D1c are arranged to a movable electrode D1a in a parallel-plate shape. The detecting unit D2 is a detecting unit for detecting the relative displacement between the movable unit 6a and the movable units 6b/6c, and the fixed electrode D2b is arranged to one movable electrode D2a in a parallel-plate shape, and the fixed electrode D2c is arranged to the other movable electrode D2a in a parallel-plate shape. Also, the detecting unit D3 is a detecting unit for detecting the relative displacement of the movable unit 6b with respect to the fixed unit 2b as similar to the detecting unit D1, and fixed electrodes D3b and D3c are arranged to a movable electrode D3a in a parallel-plate shape. The detecting unit D4 is similarly a detecting unit for detecting the relative displacement of the movable unit 6c with respect to the fixed unit 2c, and fixed electrodes D4b and D34c are arranged to a movable electrode D4a in a parallel-plate shape.

A manufacturing process, a mounting mode, and others for the inertial sensor S3 of the first embodiment are the same as those of the illustrative example, and therefore, their descriptions are omitted. The characteristics of the first embodiment, that is, reasons of why the measurement ranges significantly different from each other are possible and why the measurement ranges can be achieved by the detecting units having the similar shape such as the distance are described in detail. Also here, although not limited similarly to the example, specific measurement ranges of $\pm 2G$ and $\pm 100G$ are taken as an example for convenience of description.

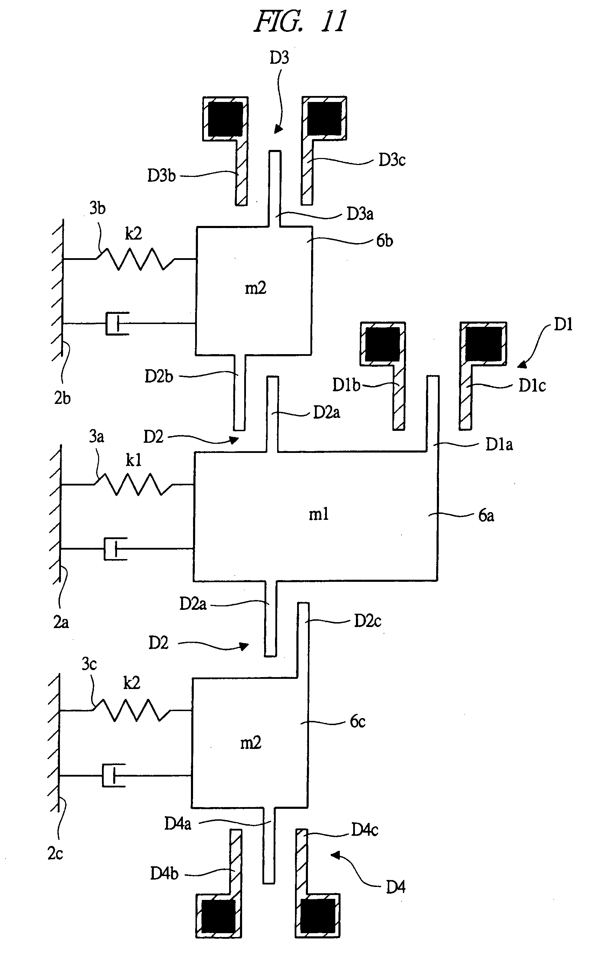

FIG. 10 is rewritten as a vibration system model in FIG. 11. FIG. 11 is an explanatory diagram illustrating the vibration system model of the inertial sensor S3 of the first embodiment, and same components are denoted by the same reference symbols so as to correspond to an actual shape. The inertial sensor S3 of the first embodiment is configured as three vibration systems. A first vibration system includes: the movable unit 6a; the spring (the support beam 3a); and the detecting units D1 and D2, a second vibration system includes: the movable unit 6b; the spring (the support beam 3b); and the detecting units D2 and D3, and a third vibration system includes: the movable unit 6c; the spring (the support beam 3c) ; and the detecting units D2 and D4. A displacement "x1" of the first vibration system is used for detecting a narrow measurement range (for example, $\pm 2G$). Also, the second and third vibration systems are formed so as to have the same natural frequency of "f2 = f3", and therefore, displacements "x2" and "x3" each per unit acceleration are also shown as "x2 = x3" from the above-described Expression (1). In the inertial sensor S3 of the first embodiment, a wide measurement range (for example, $\pm 100G$) is measured by using a displacement difference between the displacement x1 and the displacement x2 or x3. That is, the greatest characteristic of the first embodiment is that the wide measurement range is measured by using a relative displacement (displacement difference) between the plurality of movable units 6a and 6b.

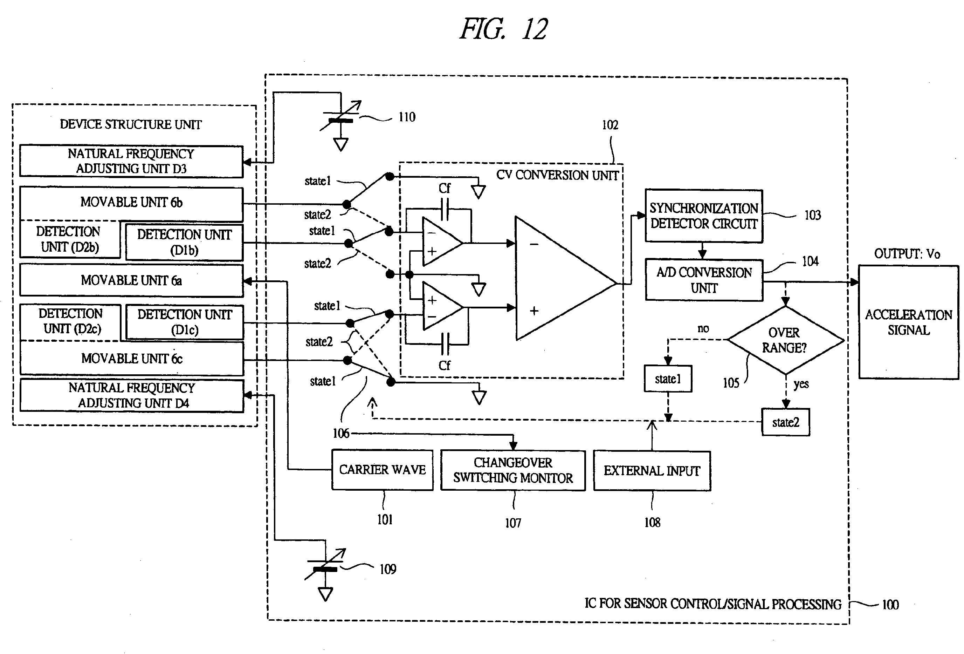

Next, designing and functions of the inertial sensor S3 of the first embodiment are described. Similarly to the example, also in the first embodiment, an input of the saturated electrostatic capacitance change ($\Delta C$) by the CV conversion unit 102 of the IC 100 for sensor control/signal processing (see FIG. 12 described later) is assumed to be 0.25 pF, and the distance g between the movable electrode and the fixed electrodes of the detecting unit is assumed to be 3 $\mu$m due to a process limitation. Also, the output nonlinearity is assumed to be $\pm 1\%$ or smaller. In the inertial sensor S3, in order to detect the acceleration of $\pm 100G$, it is required to design natural frequencies f1, f2, and f3 of the first to third vibration systems so that, even when the acceleration of $\pm 100G$ is applied, the movable electrodes D1a, D2a, D3a, and D4a and the fixed electrodes D1b, D1c, D2b, D2c, D3b, D3c, D4b, and D4c, which configure all detecting units D1, D2, D3, and D4, are not physically in contact with each other.

From the above-described Expression (1), it is found out that, when the acceleration of $\pm 100G$ is applied, the natural frequency providing the displacement x of 3 $\mu$m is 2877 Hz. In the inertial sensor S3 of the first embodiment, the natural frequency f1 of the first vibration system is set to 3000 Hz. Since the natural frequency f1 is set to 3000 Hz, the displacement amount x1 obtained when $\pm 2G$ is applied to the movable unit 6a of the first vibration system is 55 nm, which is smaller than 300 nm, and therefore, the nonlinearity satisfies $\pm 1\%$ or smaller as illustrated in FIG. 8. However, in order to provide the electrostatic capacitance change $\Delta C$ of 0.25 pF, an electrode scale which is 5.3 times that of the detecting unit of the inertial sensor S2 of the example is required. Although the scale is varied by a thickness of the active layer 1a or others, the thickness of the active layer 1a is 40 $\mu$m in the inertial sensor S3 of the first embodiment, and an overlap area between the movable electrode D1a and the fixed electrodes D1b/ D1c of the detecting unit D1 is set to 200 μm, and therefore, the number of electrodes is set to 140. A parallel-plate-type electrostatic capacitance detecting method is applied for the detecting unit D1. When a width of a comb teeth forming the movable electrode and the fixed electrodes is set to 4 μm, a length required to form the detecting unit D1 is 2940 μm, and, electrodes are formed on both sides of the movable unit 6a, and therefore, the size of the first vibration system is approximately 1.5 mm x 1.5 mm. The size of the inertial sensor can be further downsized if an aspect ratio defined as a ratio between the distance g of the detecting unit D1 and the thickness of the active layer 1a can be increased.

Next, the natural frequencies f2 and f3 of the second and third vibration systems are described. The natural frequencies f2 and f3 may be designed so that the relative displacement between the movable units 6a and 6b or 6c obtained when ±100G is applied is 300 nm in order to provide the electrode scale as small as possible as satisfying the nonlinearity of ±1% or smaller. When the natural frequencies f2 and f3 are set to 3178 Hz, from the above-described Expression (1), it is found out that the relative displacement (x1-x2 or x1-x3) between the movable units 6a and 6b or 6c obtained when ±100G is applied becomes 300 nm, and therefore, the detecting unit D2 whose electrostatic capacitance change $\Delta C$ is 0.25 pF and whose electrode scale is approximately 1/5.3 times an electrode scale of the detecting unit D1 as satisfying the specification of the nonlinearity of ±1% or smaller can be formed.

Here, the natural frequency f1 of the first vibration system is set to 3000 Hz and the natural frequencies f2 and f3 of the second and third vibration systems are set to 3178 Hz. However, conversely, the natural frequency f1 may be set to 3178 Hz and the natural frequencies f2 and f3 may be set to 3000 Hz. In this case, the detecting unit D1 whose electrode scale is large can be arranged on a periphery of the inertial sensor S3, and therefore, is advantageous in downsizing.

Next, the detecting units (also each including a function of a natural frequency adjusting unit, and hereinafter referred to as a natural frequency adjusting unit) D3 and D4 are described with reference to FIG. 12 described later. In the inertial sensor S3 of the first embodiment, by applying a DC voltage between the movable electrodes D3a and D4a of the natural frequency adjusting units D3 and D4 and the fixed electrodes D3b, D3c, D4b, and D4c, the natural frequencies f2 and f3 of the second and third vibration systems including the movable units 6b and 6c are adjusted with using the electrostatic spring effect publicly already known.

As described above, in order to measure ±100G, the relative displacement between the movable unit 6a and the movable units 6b/6c is used. Therefore, it is required to provide the same displacement amount per unit acceleration for the movable units 6b and 6c. However, the second and third vibration systems including the movable units 6b and 6c are locationally separated from each other, and are configured as an independent vibration system to each other. Thus, it is almost impossible to exactly match the natural frequencies of the respective vibration systems with each other due to influence of the process error. Therefore, by providing the natural frequency adjusting units D3 and D4, the natural frequencies f2 and f3 of the second and third vibration systems are adjusted. More specifically, the inertial sensor S3 is AC-vibrated before shipping to adjust DC voltages 109 and 110 to be applied to the natural frequency adjusting units D3 and D4 so that a DC-level output of the inertial sensor S3 is 0 (see FIG. 12).

Since the natural frequency adjusting units D3 and D4 have the same structure as that of the detecting unit D1, they can be also used for detecting the displacement x2 and x3 of the movable units 6b and 6c. More particularly, in an inertial sensor having a small ratio between measurement ranges, a difference between the natural frequency f1 of the first vibration system and the natural frequencies f2 and f3 of the second and third vibration systems is large, and therefore, a shift of the natural frequency due to the process error is almost negligible, thus, the number of measurement ranges can be increased by using the natural frequency adjusting units D3 and D4 as the detecting units.

FIG. 12 illustrates an electrical structure in the inertial sensor S3 of the first embodiment, and this is a case that the D3 and D4 are used as the natural frequency adjusting units. Although not illustrated, when the natural frequency adjusting units D3 and D4 are used as the detecting units for detecting the displacements x2 and x3 of the movable units 6b and 6c, the carrier wave 101 may be applied to the natural frequency adjusting units D3 and D4.

Also in the first embodiment, similarly to the inertial sensor S2 of the example, the measurement range can be manually switched through the external input 108, and can be automatically switched through the over-range determining unit 105. The specific content of switching the measurement range is the same as that of the inertial sensor S2 of the example, and therefore, a description for this is omitted.

By performing the procedure of designing the inertial sensor S3 according to the first embodiment described above, the inertial sensor which is robust in the process variation as having significantly different (±2G and ±100G) measurement ranges. That is, the detecting units D1, D2, D3, and D4 have the similar shape such as the distance therebetween, and the shapes of the movable units 6a, 6b, and 6c and the springs (the support beams 3a, 3b, and 3c) forming respective vibration systems can be almost the same as each other, and therefore, the influence on the performance variation due to the process error is relatively small, and the inertial sensor is robust in the process error, and further, its downsizing can be achieved.

Second Embodiment

In a second embodiment, an inertial sensor having a plurality of measurement ranges has characteristics to have measurement ranges as many as the number of vibration systems plus 1 or more by connecting a plurality of vibration systems including a plurality of movable units and springs to each other and measuring an absolute displacement of the movable units of each vibration system with respect to a substrate and a relative displacement between the movable units, and to be advantageous in downsizing because the movable units and the springs are shared by the vibration systems. Hereinafter, with reference to the drawings, the second embodiment is described in detail. Also, overlapping components with those of the example and the first embodiments are denoted by the same reference symbols, and descriptions for them are omitted.

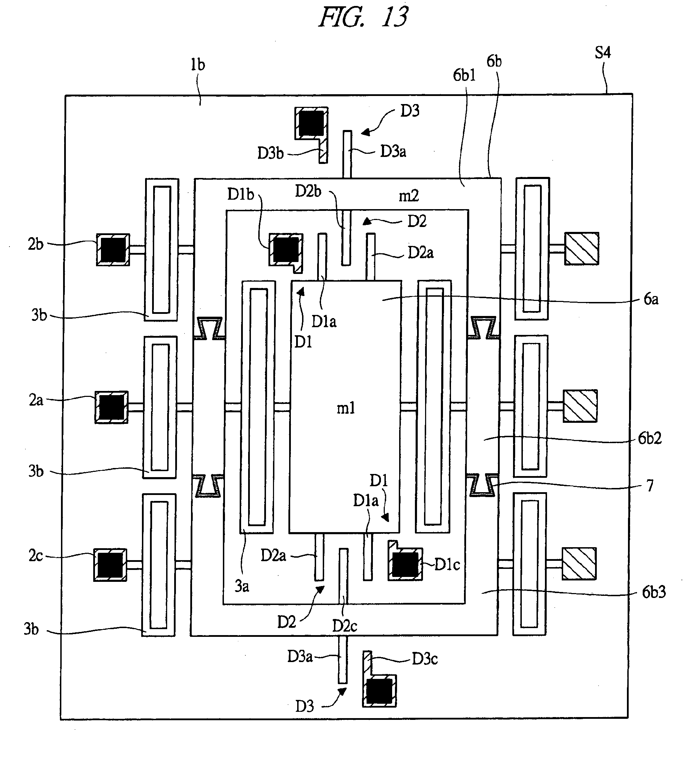

FIG. 13 is a plan view illustrating an example of a main structure of the inertial sensor according to the second embodiment. An inertial sensor S4 of the second embodiment includes: fixed units 2a, 2b, and 2c supported and fixed on a support substrate 1b; a support beam 3b for movably supporting a movable unit 6b described later with respect to the fixed units 2a, 2b, and 2c; a movable unit 6b suspended by the support beam 3b and displaced, in applying an acceleration, as following the acceleration; a support beam 3a for movably supporting a movable unit 6a described later with respect to the movable unit 6b; the movable unit 6a suspended by the support beam 3a, and displaced, in applying an acceleration, as following the acceleration; detecting units D1, D2, and D3 for detecting an amount of the displacement of the movable units 6a, and 6b; and electrode pads (whose reference symbols are omitted) for exchanging signals with an external circuit through wire bonding or others.

In the detecting unit D1, a fixed electrode D1b is arranged to one movable electrode D1a in a parallel-plate shape, and a fixed electrode D1c is arranged to the other movable electrode D1a in a parallel-plate shape. Similarly, in the detecting unit D2, a fixed electrode D2b is arranged to one movable electrode D2a in a parallel-plate shape, and a fixed electrode D2c is arranged to the other movable electrode D2a in a parallel-plate shape. In the detecting unit D3, a fixed electrode D3b is arranged to one movable electrode D3a in a parallel-plate shape, and a fixed electrode D3c is arranged to the other movable electrode D3a in a parallel-plate shape.

The inertial sensor S4 of the second embodiment is an inertial sensor including two vibration systems. As a matter of course, the inertial sensor is not meant to be limited to include the two vibration systems, and may include N pieces of vibration systems. Also, the measurement ranges in the case of the inertial sensor including the N pieces of vibration systems are (N+1) or more types.

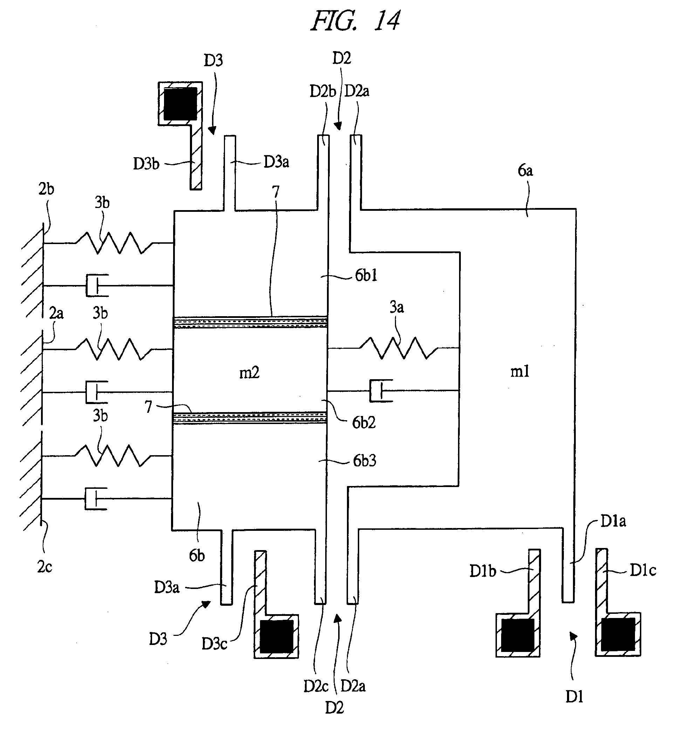

FIG. 13 is rewritten as a vibration system model in FIG. 14. FIG. 14 is an explanatory diagram illustrating a vibration system model of the inertial sensor S4 of the second embodiment, and the same components are denoted by the same reference symbols so as to correspond to an actual shape. The inertial sensor S4 of the second embodiment includes: a first vibration system including the movable unit 6a (a movable unit "m1") and the spring (the support beam 3a) ; and a second vibration system including the movable unit 6b (a movable unit "m2") and the spring (the support beam 3b). More particularly, in the second vibration system, the movable unit 6b is divided into three parts by an insulating film 7 made of an insulating substance, and movable units 6b1, 6b2, and 6b3 are mechanically connected to each other but electrically separated from each other.

The insulating film 7 is formed by deeply etching the active layer 1a with using the DRIE method and burying an insulating film, such as an oxide film, with using a thick film CVD (Chemical Vapor Deposition) method or others. Further, the insulating film 7 is formed in a shape which is bent at least once (FIG. 13 illustrates an example of bending four times) as illustrated in FIG. 13 in order to prevent wall collapse at an interface of the insulating film 7 among the movable units 6b1, 6b2, and 6b3.

As the measurement ranges of the inertial sensor S4 of the second embodiment, three ranges can be selected by measuring a displacement x1 of the first movable unit 6a, a displacement x2 of the second movable unit 6b, and a relative displacement xr between the movable units 6a and 6b. The inertial sensor S4 of the present embodiment has a first mode natural frequency at which the two movable units 6a and 6b are vibrated in the same phase in a several kHz band. An acceleration sensor mainly measures frequency components of several tens to 100 Hz or lower often, and a difference of phases between the displacements of the movable units 6a and 6b does not occur, and therefore, the displacement x1 of the movable unit 6a with respect to the support substrate 1b is a sum of the displacement x2 of the movable unit 6b and the relative displacement xr between the movable units 6a and 6b. Therefore, a relation of "x1 > x2" is taken for the application of all acceleration.

The displacement amounts x1, x2, and xr can be obtained by using the above-described Expression (1). Firstly, the relative displacement xr between the movable units 6a and 6b can be obtained by substituting a first natural frequency f1 into the above-described Expression (1), the first natural frequency f1 obtained by taking weights of the movable unit 6a and the movable electrodes D1a and D2a of the detecting units D1 and D2 as "m" and taking the spring constant of the support beam 3a supporting the movable unit 6a as "k" when the vibration system models illustrated in FIG. 14 are regarded as two independent one-degree-of-freedom systems.

Next, the displacement amount x2 is a displacement of the movable unit 6b, and can be obtained by substituting a second natural frequency f2 into the above-described Expression (1), the second natural frequency f2 obtained by taking weights of the movable unit 6b, the support beam 3a connected to this movable unit 6b as being suspended, the movable unit 6a, the movable electrode D1a of the detecting unit D1, and the movable electrode D2a of the detecting unit D2 as "m" and taking the spring constant of the support beam 3b supporting the movable unit 6b as "k". Also, the displacement of the movable unit 6a x1 with respect to the support substrate 1b can be obtained as a sum of the displacements x2 and xr. By detecting the above-described displacements x1, xr, and x2 with using the detecting units D1, D2, and D3, three measurement ranges can be obtained.

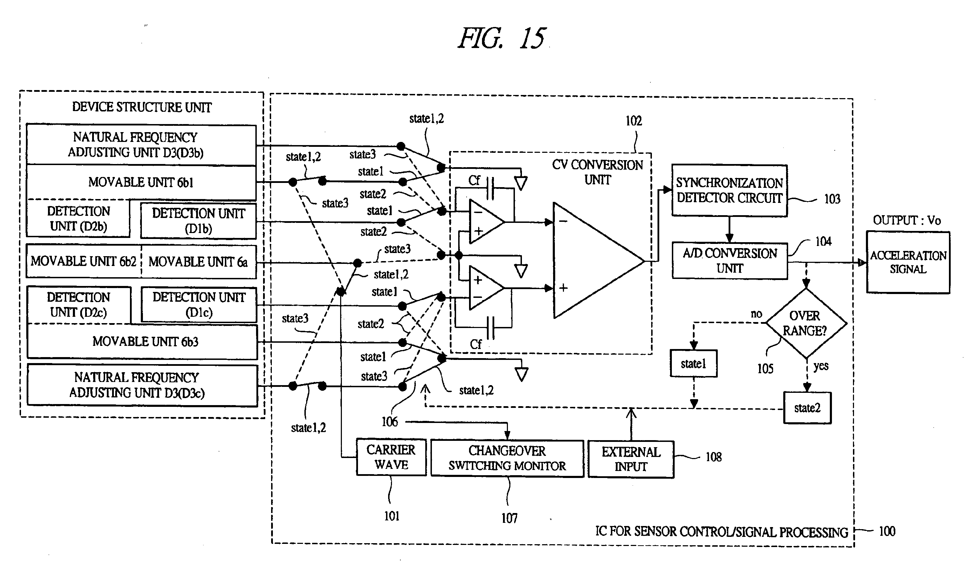

FIG. 15 illustrates an electrical structure in the inertial sensor S4 of the second embodiment, and the three measurement ranges can be automatically or manually switched with using the over-range determining unit 105, the range changeover switch 106, and the external input 108. Here, different contents from those of the inertial sensor S2 of the illustrative example are mainly described.

The range changeover switch 106 has three states in accordance with the measurement ranges. Firstly, in a state 1, the displacement x1 of the movable unit 6a is detected by applying the carrier wave 101 to the movable unit 6a via the movable unit 6b2 and inputting outputs from the fixed electrodes D1b and D1c of the detecting unit D1 to the CV conversion unit 102. At this time, the other detecting units D2 and D3 and movable units 6b1 and 6b3 are connected to a DC bias of the CV conversion unit 102.

Next, in state 2, the relative displacement xr between the movable units 6a and 6b is detected by applying the carrier wave 101 to the movable unit 6a via the movable unit 6b2 as similarly to state 1 and inputting outputs from the fixed electrodes D2b and D2c of the detecting unit D2 to the CV conversion unit 102 via the movable units 6b1 and 6b3. At this time, the other detecting units D1 and D3 are connected to the DC bias of the CV conversion unit 102.

Finally, in state 3, the displacement x2 of the movable unit 6b is detected by applying the carrier wave 101 to the movable units 6b1 and 6b3 and inputting outputs from the fixed electrodes D3b and D3c of the detecting unit (natural frequency adjusting unit) D3 to the CV conversion unit 102. At this time, the movable unit 6b2 and the other detecting unit D1 are connected to the DC bias of the CV conversion unit 102.

According to the inertial sensor S4 in the second embodiment described above, the relative displacement between the vibration systems is measured as having the N types of vibration systems so as to obtain the three measurement ranges with using two vibration systems, so that at least (N+1) types of measurement ranges can be obtained. That is, output ranges whose types are more than that of vibration systems including the movable units 6a and 6b and the springs (the support beams 3a and 3b) can be obtained.

In the foregoing, the invention made by the inventors of the present invention has been concretely described based on the example and the embodiments. However, it is needless to say that the present invention is not limited to the foregoing embodiments and various modifications and alterations can be made within the scope of the present invention as defined in the appended claims.

**INDUSTRIAL APPLICABILITY**

An inertial sensor according to the present invention can be extremely widely utilized for automobiles, mobile devices, amusement devices, home information appliances, and others.

**Claims**

1. An inertial sensor (S3) for measuring acceleration by detecting an electrostatic capacitance change, comprising:

    N, N being a natural number of 2 or larger, pieces of movable units (6a, 6b, 6c) connected to a fixed unit (2a, 2b, 2c) on a substrate (1b) via an elastic body (3a, 3b, 3c);
    a plurality of first detecting units (D1, D3, D4) for detecting a relative displacement of each of the N pieces of movable units (6a, 6b, 6c) with respect to the fixed unit (2a, 2b, 2c);
    **characterised by** at least one second detecting unit (D2) for detecting a relative displacement between the movable units (6a, 6b, 6c), so that the inertial sensor (S3) has N+1 or more types of measurement ranges.

2. An inertial sensor (S4) for measuring acceleration by detecting an electrostatic capacitance change, comprising:

    N, N being a natural number of 2 or larger, pieces of movable units (6a, 6b) at least including a first movable unit (6b) connected to a fixed unit (2a, 2b, 2c) on a substrate (1b) via a first elastic body (3b) and a second movable unit (6a) connected to the first movable unit (6b) via a second elastic body (3a);
    a plurality of first detecting units (D1, D3) for detecting a relative displacement of each of the N pieces of movable units (6a, 6b) with respect to the fixed unit (2a, 2b, 2c);

characterised by at least one second detecting unit (D2) for detecting a relative displacement between the movable units (6a, 6b), so that the inertial sensor (S4) has N+1 or more types of measurement ranges.

3. The inertial sensor (S4) according to claim 2, wherein the first movable unit (6b) is mechanically connected and electrically separated by interposing an insulating film (1c).

4. The inertial sensor (S4) according to claim 3, wherein the insulating film (1c) is bent at least once.

5. The inertial sensor (S3; S4) according to claim 1 or 2, wherein, in the N+1 or more types of measurement ranges, a ratio between measurement ranges is 10 or larger.

6. The inertial sensor (S3; S4) according to claim 1 or 2, wherein, in the plurality of first detecting units (D1, D3, D4) and the at least one second detecting unit (D2), a parallel-plate-type electrostatic capacitance detecting method is used, and a value of an electrostatic capacitance change obtained when the maximum acceleration measurable for a measurement range of each of the detecting units (D1-D4) is applied is the same value for each of the detecting units (D1-D4).

7. The inertial sensor (S3; S4) according to claim 1 or 2, further comprising a switch (106) for selecting any of the N+1 or more types of measurement ranges.

8. The inertial sensor (S3; S4) according to claim 1 or 2, further comprising:

a conversion unit (104) for converting a value of an electrostatic capacitance change of each of the plurality of first detecting units (D1, D3, D4) and the at least one second detecting unit (D2) to a voltage value;
a determining unit (105) for determining whether or not an output value from the conversion unit (104) exceeds a certain range; and
a switch (106) for switching between a carrier wave (101) applied to each of the plurality of first detecting units (D1, D3, D4) and the at least one second detecting unit (D2) and a signal from each of the plurality of first detecting units (D1, D3, D4) and the at least one second detecting unit (D2) based on an output signal from the determining unit (105).

## Patentansprüche

1. Trägheitssensor (S3) zum Messen der Beschleunigung durch Erfassen einer elektrostatischen Kapazitätsänderung, mit
N, wobei N eine natürliche Zahl größer oder gleich 2 ist, beweglichen Einheiten (6a, 6b, 6c), die über einen elastischen Körper (3a, 3b, 3c) mit einer festen Einheit (2a, 2b, 2c) auf einem Substrat (1 b) verbunden sind,
mehreren ersten Erfassungseinheiten (D1, D3, D4) zum Erfassen einer relativen Verschiebung von jeder der N beweglichen Einheiten (6a, 6b, 6c) bezüglich der festen Einheit (2a, 2b, 2c),
gekennzeichnet durch wenigstens eine zweite Erfassungseinheit (D2) zum Erfassen einer relativen Verschiebung zwischen den beweglichen Einheiten (6a, 6b, 6c), so dass der Trägheitssensor (S3) mindestens N+1 Arten von Messbereichen aufweist.

2. Trägheitssensor (S4) zum Messen einer Beschleunigung durch Erfassen einer elektrostatischen Kapazitätsänderung, mit
N, wobei N eine natürliche Zahl größer oder gleich 2 ist, beweglichen Einheiten (6a, 6b), die wenigstens eine erste bewegliche Einheit (6b), die über einen ersten elastischen Körper (3b) mit einer festen Einheit (2a, 2b, 2c) auf einem Substrat (1 b) verbunden ist, und eine zweite bewegliche Einheit (6a), die über einen zweiten elastischen Körper (3a) mit der ersten beweglichen Einheit (6b) verbunden ist, umfassen,
mehreren ersten Erfassungseinheiten (D1, D3, D4) zum Erfassen einer relativen Verschiebung von jeder der N beweglichen Einheiten (6a, 6b) gegenüber der festen Einheit (2a, 2b, 2c),
gekennzeichnet durch wenigstens eine zweite Erfassungseinheit (D2) zum Erfassen einer relativen Verschiebung zwischen den beweglichen Einheiten (6a, 6b), so dass der Trägheitssensor (S3) mindestens N+1 Arten von Messbereichen aufweist.

3. Trägheitssensor (S4) nach Anspruch 2, wobei die erste bewegliche Einheit (6b) durch Einschieben eines Isolationsfilms (1c) mechanisch angeschlossen und elektrisch separiert ist.

**4.** Trägheitssensor (S4) nach Anspruch 3, wobei der Isolationsfilm (1c) wenigstens einmal gebogen ist.

**5.** Trägheitssensor (S3; S4) nach Anspruch 1 oder 2, wobei in den mindestens N+1 Arten von Messbereichen ein Verhältnis unter den Messbereichen mindestens 10 beträgt.

**6.** Trägheitssensor (S3; S4) nach Anspruch 1 oder 2, wobei in den mehreren ersten Erfassungseinheiten (D1, D3, D4) und der wenigstens einen zweiten Erfassungseinheit (D2) ein parallelplattenartiges elektrostatisches Kapazitätserfassungsverfahren verwendet wird, und ein Wert einer elektrostatischen Kapazitätsänderung, der erhalten wird, wenn die maximal messbare Beschleunigung für einen Messbereich von jeder der Erfassungseinheiten (D1-D4) angewandt wird, der gleiche Wert für jede der Erfassungseinheiten (D1-D4) ist.

**7.** Trägheitssensor (S3; S4) nach Anspruch 1 oder 2, ferner mit einem Schalter (106) zum Auswählen von einem der mindestens N+1 Arten von Messbereichen.

**8.** Trägheitssensor (S3; S4) nach Anspruch 1 oder 2, ferner mit
einer Umwandlungseinheit (104) zum Umwandeln eines Wertes einer elektrostatischen Kapazitätsänderung von jeder der mehreren ersten Erfassungseinheiten (D1, D3, D4) und der wenigstens einen zweiten Erfassungseinheit (D2) in einen Spannungswert,
einer Bestimmungseinheit (105) zum Bestimmen, ob ein Ausgabewert von der Umwandlungseinheit (104) einen bestimmten Bereich überschreitet, und
einem Schalter (106) zum Schalten zwischen einer Trägerwelle (101), die an jede der mehreren ersten Erfassungseinheiten (D1, D3, D4) und die wenigstens eine zweite Erfassungseinheit (D2) angelegt wird, und einem Signal von jeder der mehreren ersten Erfassungseinheiten (D1, D3, D4) und der wenigstens einen zweiten Erfassungseinheit (D2) basierend auf einem Ausgabesignal von der Bestimmungseinheit (105).

**Revendications**

**1.** Capteur d'inertie (S3) pour mesurer une accélération en détectant un changement de capacitance électrostatique, comportant :

N, N étant un nombre naturel égal à 2 ou supérieur, éléments d'unités mobiles (6a, 6b, 6c) reliés à une unité fixe (2a, 2b, 2c) sur un substrat (1b) par l'intermédiaire d'un corps élastique (3a, 3b, 3c),
une pluralité de premières unités de détection (D1, D3, D4) pour détecter un déplacement relatif de chacun des N éléments d'unités mobiles (6a, 6b, 6c) par rapport à l'unité fixe (2a, 2b, 2c),
**caractérisé par** au moins une deuxième unité de détection (D2) pour détecter un déplacement relatif entre les unités mobiles (6a, 6b, 6c), de sorte que le capteur d'inertie (S3) a N+1 types ou plus de plages de mesure.

**2.** Capteur d'inertie (S4) pour mesurer une accélération en détectant un changement de capacitance électrostatique, comportant :

N, N étant un nombre naturel égal à 2 ou supérieur, éléments d'unités mobiles (6a, 6b) comprenant au moins une première unité mobile (6b) reliée à une unité fixe (2a, 2b, 2c) sur un substrat (1b) par l'intermédiaire d'un premier corps élastique (3b) et une seconde unité mobile (6a) reliée à la première unité mobile (6b) par l'intermédiaire d'un second corps élastique (3a),
une pluralité de premières unités de détection (D1, D3) pour détecter un déplacement relatif de chacun des N éléments d'unités mobiles (6a, 6b) par rapport à l'unité fixe (2a, 2b, 2c),
**caractérisé par** au moins une deuxième unité de détection (D2) pour détecter un déplacement relatif entre les unités mobiles (6a, 6b) de sorte que le capteur d'inertie (S4) a N+1 types ou plus de plages de mesure.

**3.** Capteur d'inertie (S4) selon la revendication 2, dans lequel la première unité mobile (6b) est reliée mécaniquement et électriquement séparée en intercalant un film isolant (1c).

**4.** Capteur d'inertie (S4) selon la revendication 3, dans lequel le film isolant (1C) est plié au moins une fois.

**5.** Capteur d'inertie (S3 ; S4) selon la revendication 1 ou 2, dans lequel, dans les N+1 types ou plus de plages de mesure, un rapport entre les plages de mesure est égal à 10 ou une valeur supérieure.

**6.** Capteur d'inertie (S3 ; S4) selon la revendication 1 ou 2, dans lequel, dans la pluralité de premières unités de détection (D1, D3, D4) et la au moins une deuxième unité de détection (D2), un procédé de détection de capacitance électrostatique de type plaque parallèle est utilisé, et une valeur d'un changement de capacitance électrostatique obtenue lorsque l'accélération maximale mesurable pour une plage de mesure de chacune des unités de détection (D1-D4) est appliquée est la même valeur pour chacune des unités de détection (D1-D4).

**7.** Capteur d'inertie (S3 ; S4) selon la revendication 1 ou 2, comportant en outre un commutateur (106) pour sélectionner l'un quelconque des N+1 types ou plus de plages de mesure.

**8.** Capteur d'inertie (S3 ; S4) selon la revendication 1 ou 2, comportant en outre :

une unité de conversion (104) pour convertir une valeur d'un changement de capacitance électrostatique de chacune de la pluralité de premières unités de détection (D1, D3, D4) et de la au moins une deuxième unité de détection (D2) en une valeur de tension,
une unité de détermination (105) pour déterminer si oui ou non une valeur de sortie de l'unité de conversion (104) dépasse une plage particulière, et
un commutateur (106) pour effectuer une commutation entre une onde porteuse (101) appliquée à chacune de la pluralité de premières unités de détection (D1, D3, D4) et la au moins une seconde unité de détection (D2) et un signal en provenance de chacune de la pluralité de premières unités de détection (D1, D3, D4) et de la au moins une seconde unité de détection (D2) sur la base d'un signal de sortie en provenance de l'unité de détermination (105).

*FIG. 1*

*FIG. 2*

FIG. 3

DISPLACEMENT x DUE TO ACCELERATION [μm]

## FIG. 4

## FIG. 5

## FIG. 6

## FIG. 7

FIG. 8

## FIG. 9

DEVICE STRUCTURE UNIT

DETECTING UNIT D2

MOVABLE UNIT 6

DETECTING UNIT D1

CARRIER WAVE — 101

CV CONVER UNIT — 102

SYNCHRONIZATION DETECTOR CIRCUIT — 103

A/D CONVERSION UNIT

104

OUTPUT: Vo

ACCELERATION SIGNAL

state1

state2 — state1

state2

106

105

OVER RANGE?

no

yes

state1

state2

IC FOR SENSOR CONTROL/SIGNAL PROCESSING

100

CHANGEOVER SWITCHING MONITOR

107

EXTERNAL INPUT

108

EP 2 336 788 B1

## FIG. 10

## FIG. 11

*FIG. 12*

## FIG. 13

## FIG. 14

## FIG. 15

DEVICE STRUCTURE UNIT

NATURAL FREQUENCY ADJUSTING UNIT D3(D3b)

MOVABLE UNIT 6b1

| DETECTION UNIT (D2b) | DETECTION UNIT (D1b) |

| MOVABLE UNIT 6b2 | MOVABLE UNIT 6a |

| DETECTION UNIT (D2c) | DETECTION UNIT (D1c) |

MOVABLE UNIT 6b3

NATURAL FREQUENCY ADJUSTING UNIT D3(D3c)

state1,2
state3
state1
state2
state1
state2
state3
state1,2
state1
state2
state1
state3
state1,2
state1,2
state3
state1,2

102

CV CONVERSION UNIT

Cf

Cf

SYNCHRONIZATION DETECTOR CIRCUIT — 103

A/D CONVERSION UNIT — 104

OUTPUT : Vo

ACCELERATION SIGNAL

OVER RANGE? 105
no
yes

state1

state2

CARRIER WAVE
101

CHANGEOVER SWITCHING MONITOR
107

EXTERNAL INPUT — 108

106

IC FOR SENSOR CONTROL/SIGNAL PROCESSING — 100

EP 2 336 788 B1

**EP 2 336 788 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004198310 A
- JP 2008070312 A
- JP 2008008820 A

- US 2004187573 A1
- GB 2393785 A
- US 2008098815 A1